# EUROPEAN PATENT SPECIFICATION

(11) **EP 2 893 189 B1**
(45) Date of publication and mention of the grant of the patent: **31.08.2022**
(21) Application number: 13737772.7
(22) Date of filing: 03.07.2013
(51) Int. Cl.: F04B 39/00, F01C 21/00, F04B 39/02, F04B 39/14, F04B 41/06, F25B 31/00

(54) **REFRIGERATION COMPRESSOR FEET MOUNTING**
STÜTZFUSSMONTAGE FÜR KÜHLKOMPRESSOR
MONTAGE DE COMPRESSEUR FRIGORIFIQUE SUR SUPPORTS

(30) Priority: 04.09.2012 US 201261696716 P
(43) Date of publication of application: 15.07.2015
(73) Proprietor: Carrier Corporation, Farmington, CT 06034 (US)
(72) Inventor: MILLER, Frederick L., Syracuse, New York 13215 (US); KOROLEV, Igor V., Cicero, New York 13039 (US)
(74) Representative: Schmitt-Nilson Schraud Waibel Wohlfrom Patentanwälte Partnerschaft mbB
(86) International application number: PCT/US2013/049274
(87) International publication number: WO 2014/039159

(56) References cited:
- WO-A2-2008/036198
- JP-A- 2008 163 765
- US-A- 4 381 179
- US-A- 4 946 351
- US-A- 4 964 609
- US-A- 6 039 550

## Description

This application is related to US Patent Application Ser. No. 61/696,716, filed September 4, 2012, and entitled "Refrigeration Compressor Feet Mounting".

### BACKGROUND

The present disclosure relates to refrigeration compressors. More particularly, it relates to reciprocating piston compressor mounting.

A variety of refrigerant compressor configurations are in common use. Among these configurations are: screw compressors; scroll compressors; and reciprocating piston compressors. One particular subfield of refrigeration systems is chiller systems where one or more compressors are mounted on a rack. Rack mounting of compressors may be used in other applications such as central compressors for distributed retail display cabinets.

Mounting is often on parallel mounting rails of the rack. During installation and removal of compressors, there may be a tendency of the compressor to partially fall between rails.

WO 2008/036198 shows a compressor including a shell, a compression mechanism, a motor, a base member, and a mounting foot. The compression mechanism may be disposed within the shell and the motor may be drivingly engaged with the compression mechanism. The base member may be coupled to the shell and a mounting foot may be fixed to the base member. The mounting foot may include a mounting aperture extending therethrough and a slot intersecting said aperture that attenuates vibrations within an operating frequency range of the compressor.

US 6 039 550 shows a scroll compressor is disclosed which incorporates a magnet in a depression formed in the lower shell by forming a coined surface. The depression forms a side wall which confines the magnet therein so that no additional fastening mechanism is required. The magnet is preferably a ring magnet which is centered about the rotational axis of the drive shaft and near the end of the oil pick-up tube so that oil passes close to the magnet as it enters the oil pick-up tube. The magnet separates magnetic debris, such as metal filings, from the oil.

US 4 946 351 shows a vertically upright hermetic compressor for mounting to a horizontal support surface in an appliance. It comprises a housing with a bottom end, a motor compressor unit operably disposed within the housing, and a resilient boot attached to the housing bottom end to suppress noise and vibration emitted from the compressor. A mounting plate supports the boot for mounting the compressor to the horizontal support surface. The plate receives the boot in a central aperture and has grommets for spacing the boot above the surface and attaching it to the horizontal support surface.

US 4 964 609 shows a vertically upright hermetic compressor for mounting to a horizontal support surface, comprising a housing including a bottom end having an annular flange, said bottom end having one of an annular groove and an annular protrusion, a motor compressor unit operably disposed within said housing, and mounting means, removably attached to said housing bottom end, for mounting said compressor to the horizontal support surface, said mounting means comprising a resilient body member engaged about said housing and having the other of an annular groove and an annular protrusion interfitting with said one of said groove and protrusion on said housing and substantially covering said housing bottom end, and retaining means extending over said flange to vertically secure said housing.

### SUMMARY

One aspect of the disclosure involves a compressor comprising the features of claim 1.

In various implementations, the compressor may be a reciprocating compressor. An electric motor may be within the case for driving compression or external to the case. The feet may comprise bent sheet metal strips. The feet may comprise complementary mounting features. The feet complementary mounting features may comprise: a pair of holes mountable, respectively, to the first pair of internally threaded mounting features or the second pair of internally threaded mounting features in the first orientation; and at least two further holes mountable, in the second orientation, respectively to one of the internally threaded mounting features of the first pair and one of the internally threaded mounting features of the second pair. A first hole of said at least two further holes in the feet may be between the holes of the pair. The first hole may be exactly between the pair. The case may further comprise a shared boss bearing the mounting features. The feet may be secured to support rails, spanning a gap between the rails.

Other aspects of the disclosure involve a refrigeration system including such a compressor. The refrigeration system may include a recirculating flowpath through the compressor. A first heat exchanger may be positioned along the flowpath downstream of the compressor. An expansion device may be positioned along the flowpath downstream of the first heat exchanger. A second heat exchanger may be positioned along the flowpath downstream of the expansion device. The refrigerant charge may comprise at least 50% carbon dioxide by weight. The system may be a refrigerated transport system. The refrigerated transport system may further comprise a container. The second heat exchanger may be positioned to cool an interior of the container.

The system may be a fixed refrigeration system. The fixed refrigeration system may further comprise multiple refrigerated spaces. There may be a plurality of said second heat exchangers, each being positioned to cool an associated such refrigerated space.

Other aspects of the disclosure involve methods of manufacture/use of a plurality of the compressors. With a first said compressor, the pair of feet are mounted in the first orientation; and with a second said compressor, the pair of feet are mounted in the second orientation, the second compressor's case and feet being identical/interchangeable to the first compressor's case and feet.

The details of one or more embodiments are set forth in the accompanying drawings and the description below. Other features, objects, and advantages will be apparent from the description and drawings, and from the claims.

### BRIEF DESCRIPTION OF THE DRAWINGS

FIG. 1 is an exploded view of a compressor with feet in a longitudinal orientation.
FIG. 2 is a bottom view of the compressor of FIG. 1.
FIG. 3 is a further view of the compressor of FIG. 1 removably and replaceably mounted to a plurality of rails.
FIG. 4 is a bottom view of the compressor with the feet installed in a first transverse orientation.
FIG. 5 is a bottom view of the compressor with the feet installed in a second transverse orientation.
FIG. 6 is a bottom view of a foot of the compressor.
FIG. 7 is an end view of the foot.
FIG. 8 is a schematic view of a refrigeration system.
FIG. 9 is a schematic view of a fixed commercial refrigeration system.

Like reference numbers and designations in the various drawings indicate like elements.

### DETAILED DESCRIPTION

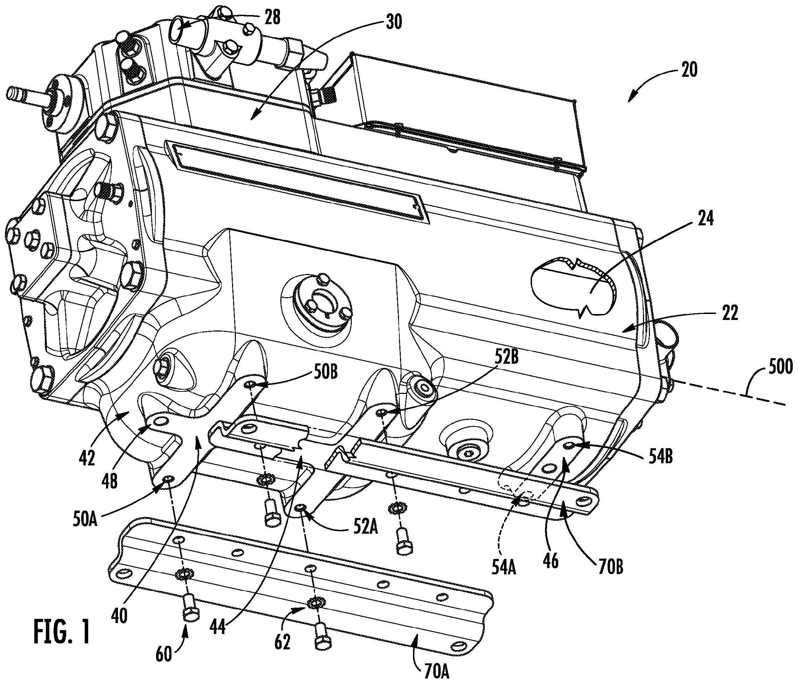

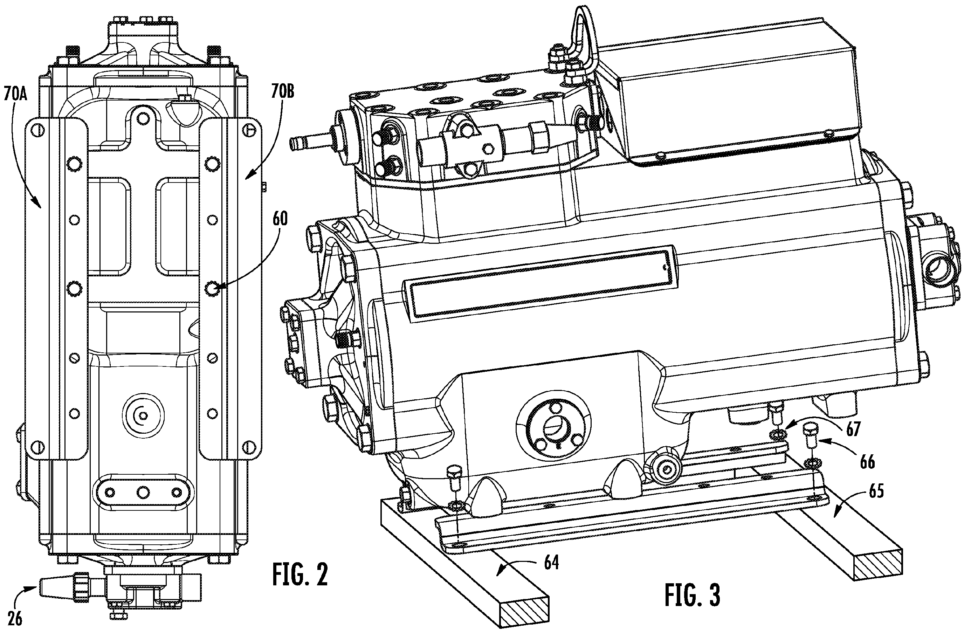

FIGS. 1 and 2 show an exemplary compressor 20. The compressor 20 has a housing (case) assembly 22. The exemplary compressor includes an electric motor 24 (e.g., having an axis 500 which also forms a compressor axis). The exemplary case 22 has a suction port (inlet) 26 (FIG. 2) and a discharge port (outlet) 28. The exemplary compressor is a reciprocating compressor wherein the housing defines a plurality of cylinders in a cylinder head section 30 of the housing. Each cylinder accommodates an associated piston (not shown) mounted for reciprocal movement at least partially within the cylinder. Exemplary multi-cylinder configurations include: in-line; V (vee); and horizontally opposed. Each of the cylinders includes a suction location and a discharge location. For example, the cylinders may be coupled in parallel so that the suction location is shared/common suction plenum fed by the suction port 26 and the discharge location is a shared/common discharge plenum feeding the discharge port 28. In other configurations, the cylinders may share suction locations/conditions but have different discharge locations/conditions. In other configurations, the cylinders may be in series. An exemplary fluorocarbon-based refrigerant is R-410A. An exemplary carbon dioxide (CO₂)-based (e.g., at least 50% CO₂ by mass/weight) refrigerant is R-744. Other refrigerants and other compressor configurations or types may be used.

The exemplary case includes a lower end or bottom 40 formed in a casting 42 (e.g., aluminum alloy, iron or steel). The casting includes a plurality of mounting features for mounting the compressor. Exemplary mounting features are internally threaded holes in bosses. As is seen in the example, several are merged. FIG. 1 shows a configuration wherein a pair of left and right forward mounting features 50A and 50B therebehind, and a second pair of intermediate mounting features 52A and 52B yet therebehind are all formed on a single island or super boss 44; whereas the rearmost pair of mounting features 54A and 54B are formed on a rear boss 46. The superboss also includes a a single forwardmost tooling hole 48 (initially cast and machined and used to register the casting for further machining operations). Alternative mounting features include bores receiving press-fit studs.

A pair of feet 70A and 70B (collectively or generically individually "70") may be mounted to the mounting features. Exemplary mounting is via fasteners (e.g., bolts 60 with washers 62) extending through apertures in the feet. As is discussed further below, FIGS. 1-3 show one exemplary use configuration in which the feet are mounted longitudinally (parallel to the axis 500). In this configuration, FIG. 3 shows the feet bolted to support rails 64 and 65 of the environmental structure (e.g., compressor rack). The exemplary compressor rack has a forward transverse rail 64 and an aft transverse rail 65 and the forward end portions of the feet are secured to the forward rail and aft end portions of the feet are secured to the aft rail (e.g., via bolts 66 with washers 67 (discussed further below)). A series of such compressors may be mounted in an array along a common pair of such rails.

As is discussed further below, the configuration of FIG. 2 involves the foot 70A mounted to the pair of features 50A and 52A and the foot 70B mounted to the pair of features 50B and 52B so that the feet are essentially parallel to the compressor axis 500. As is discussed further below, the exemplary feet and mounting features provide for alternative transverse mounting of the feet. Transverse mounting may be useful with longitudinal rack rails. By maintaining the feet transverse to the rails, stability may be improved by reducing the tendency of the compressor to partially fall between or aside the rails and preventing the feet sides from catching on the rail sides.

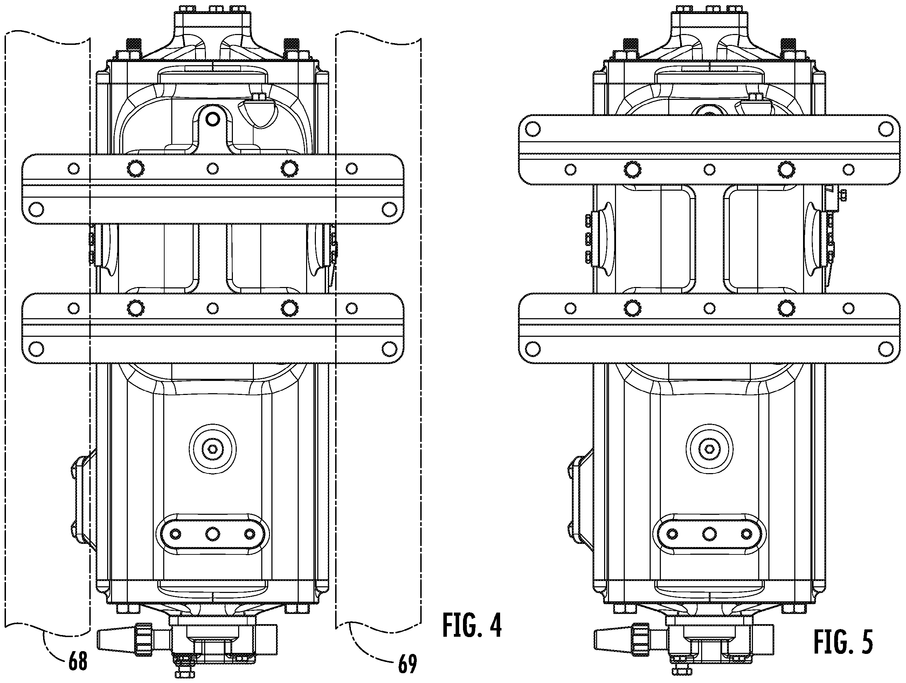

FIGS. 4 and 5 show two exemplary such transverse feet options wherein the feet are mounted transversely using the mounting feature pairs 50A and 50B and 52A and 52B (see FIG. 1). With the exemplary feet, there are several different orientation combinations as is discussed further below. In this exemplary situation, the rack mounting rails 68 and 69 are shown as longitudinal.

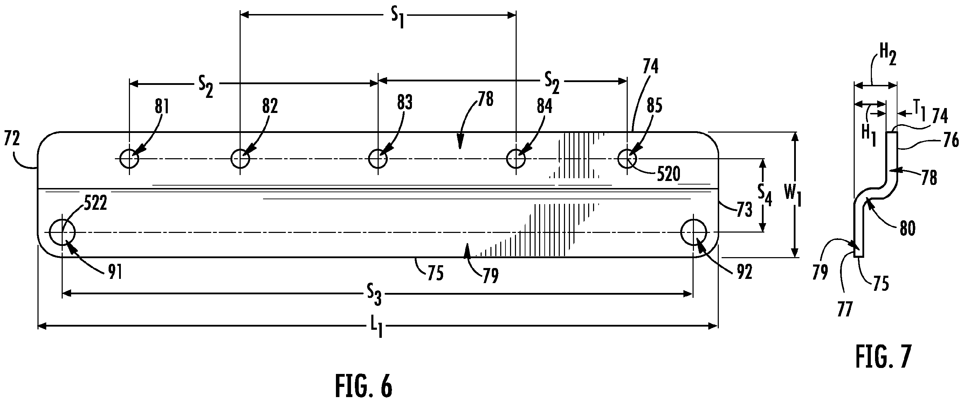

FIGS. 6 and 7 show one of the feet 70. The exemplary feet 70 are identical to each other (as opposed to being non-identical mirror images). The exemplary feet are elongate and are formed from a bent strip of bar stock (or cut in strips from a larger sheet). The exemplary feet extend from a first end 72 to a second end 73 and have respective first and second edges 74 and 75. The exemplary edges 74 and 75 may be formed by edges of the bar stock (e.g., aluminum or steel). The exemplary feet each have a first face 76 and a second face 77 (e.g., formed by opposite faces of the strip or bar stock). The exemplary feet are formed with first and second flat flange portions 78 and 79 respectively extending inward from the edges 74 and 75 and joined by a nearly S-curved transition portion 80 to offset the flange portions 78 and 79 from each other in a generally parallel relationship by a height H₁. An overall height is shown as H₂ which is merely H₁ plus the bar/strip thickness T₁. An overall length is L₁ and an overall width is W₁. Alternative constructions include cast or forged feet.

In the exemplary embodiment, the flange 78 has an array of mounting features shown as mounting holes 81, 82, 83, 84, and 85 each having an associated axis 520. Various combinations of these are complementary to various combinations of the compressor mounting features to permit the various mounting orientations discussed herein. In the exemplary implementation, the hole 83 is centrally positioned and the inboard or intermediate pair of adjacent holes 82, 84 are evenly spaced therefrom as are the outboard/distal/end holes 81, 85. An exemplary spacing between the intermediate pair of holes 82, 84 is shown as S₁ An exemplary separation between the center hole 83 and end holes 81, 85 is shown as S₂. The exemplary holes 81-85 are parallel to and in line with each other and are circular of a shared diameter.

Similarly, the second flange 79 may have a plurality of mounting features (e.g., holes) for mounting to the environmental structure (e.g., the rack rails). Exemplary features are a pair of mounting holes 91 and 92 each having an axis 522 and separated by a distance S₃.

The exemplary foot is thus a mirror image across a transverse centerplane in which the axis 520 of the hole 83 lies.

To allow for the alternative mounting, the exemplary spacing between the left and right compressor mounting holes 50A, 50B and 52A, 52B is also S₁ so that the feet may be mounted via holes 82 and 84 in the transverse conditions. As mentioned above, there are four possible combinations of mounting the feet transversely depending upon whether the edge 75 (the lower edge along the flange 79 for mounting to the environmental structure) faces forward or aft for each of the two feet. In general, the broader stance of FIG. 5 might be preferred. However, other considerations may influence orientation.

In the exemplary compressor, the mounting feature pairs 50A, 50B and 52A, 52B are relatively forward on the compressor with the feature pair 52A, 52B being nearly geometrically central. For the longitudinal feet orientation of such a compressor, it may be desired to mount the feet longitudinally off center. Accordingly, rather than dimensioning the system such that the same foot holes are used to mount the feet longitudinally as were used in the transverse mounting, the exemplary system mounts the feet longitudinally using the center hole 83 and one of the end holes 81, 85. In this example, the center hole of each foot is mounted to the intermediate mounting feature 52A or 52B and one of the end holes is mounted to the front mounting feature 50A, 50B. Again, there are several possible orientations of whether the feet lower edges face outward or inward. However, having the broadest stance favors the outward orientation of both feet as is shown in FIGS. 1-3.

Among other variations, resilient isolators (e.g., cylindrical elastomeric bodies) may intervene between the feet and the rails. A variety of isolation mounts including such elastomers and/or metallic compression springs are known as are a variety of mounting means (e.g., simple through-bolting of the feet to the rails or separate attachment of the isolation mount to the rails and the feet to the isolation mount).

Yet other variations include use of the other mounting features. For greater support, an adaptor may be used to mount one of the transverse feet to the aft mounting features 54A and 54B.

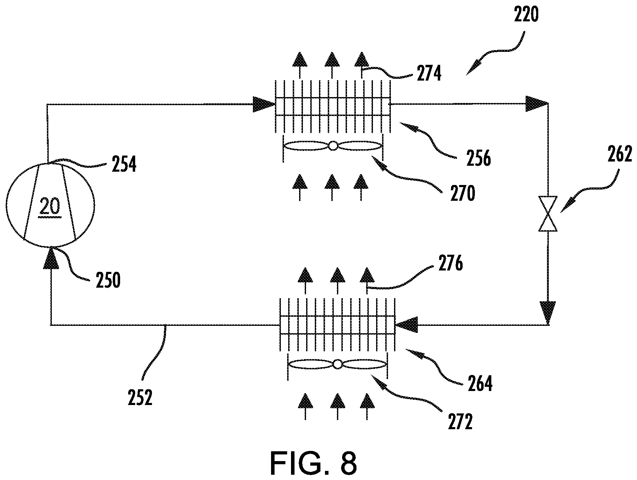

FIG. 8 shows an exemplary refrigeration system 120 including the compressor 20. The system 120 includes a system suction location/condition 150 at the suction port 26. A refrigerant primary flowpath 152 proceeds downstream from the suction location/condition 150 through the compressor cylinders in parallel to be discharged from a discharge location/condition 154 at the discharge port 28. The primary flowpath 152 proceeds downstream through the inlet of a first heat exchanger (gas cooler/condenser) 156 to exit the outlet of the gas cooler/condenser. The primary flowpath 152 then proceeds downstream through an expansion device 162. The primary flowpath 152 then proceeds downstream through a second heat exchanger (evaporator) 164 to return to the suction condition/location 150.

In a normal operating condition, a recirculating flow of refrigerant passes along the primary flowpath 152, being compressed in the cylinders. The compressed refrigerant is cooled in the gas cooler/condenser 156, expanded in the expansion device 162, and then heated in the evaporator 164. In an exemplary implementation, the gas cooler/condenser 156 and evaporator 164 are refrigerant-air heat exchangers with associated fan (170; 172)-forced airflows (174; 176). The evaporator 164 may be in the refrigerated space or its airflow may pass through the refrigerated space. Similarly, the gas cooler/condenser 156 or its airflow may be external to the refrigerated space.

Additional system components and further system variations are possible (e.g., multi-zone/evaporator configurations, economized configurations, and the like). Exemplary systems include refrigerated transport units and fixed commercial refrigeration systems.

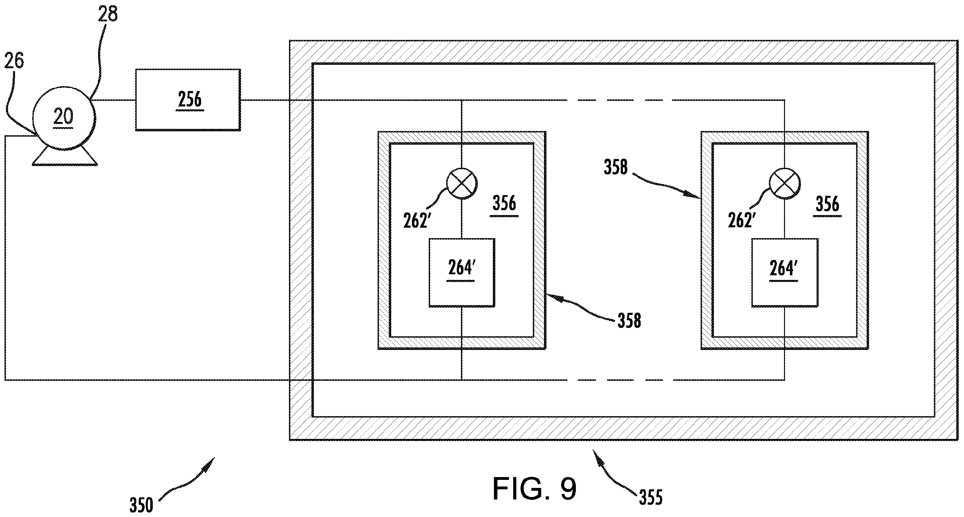

An exemplary fixed commercial refrigeration system 250 (FIG. 9) includes one or more central compressors 20 and heat rejection heat exchangers 156 (e.g., outside/on a building 255) commonly serving multiple refrigerated spaces 256 (e.g., of retail display cabinets 258 in the building). Each such refrigerated space may have its own heat absorption heat exchanger 164' and expansion device 162' (or there may be a common expansion device). Other rack-mount situations include building heating, ventilation and air conditioning (HVAC).

The compressor may be manufactured via otherwise conventional manufacturing techniques.

Although an embodiment is described above in detail, such description is not intended for limiting the scope of the present disclosure. It will be understood that various modifications may be made without departing from the scope of the claims. For example, when implemented in the reengineering of an existing compressor configuration, details of the existing configuration may influence or dictate details of any particular implementation. Accordingly, other embodiments are within the scope of the following claims.

## Claims

1. A compressor (20) comprising:
a case (22); and
a pair of feet (70A, 70B),
wherein the feet are alternatively mountable in:
a first orientation; and
a second orientation orthogonal to the first orientation;
wherein the case (22) comprises a casting with internally-threaded mounting features (50 A, 50B, 52A, 52B, 54A, 54B) including a first pair (50A, 50B) laterally spaced apart and a second pair (52A, 52B) laterally spaced apart and longitudinally spaced apart from the first pair;
wherein the pair of feet (70A, 70B) comprises complementary mounting features (81, 82, 83, 84, 85); and
**characterized in that**
the first pair of left and right forward mounting features (50A, 50B) and the second pair of intermediate mounting features (52A, 52B) are formed on a single island or super boss (44) and a rearmost pair of mounting features (54A, 54B) is formed on a rear boss (46).

2. The compressor of claim 1 wherein:
the compressor is a reciprocating compressor.

3. The compressor of claim 1 further comprising:
an electric motor (24) within the case for driving compression.

4. The compressor of claim 3 wherein:
the electric motor has an axis (500) which is configured to form a compressor axis;
a foot (70A) is mounted to a pair of a forward mounting feature (50A) and an intermediate mounting feature (52A) and another foot (70B) is mounted to a pair of a second forward mounting feature (50B) and a second intermediate mounting feature (52B); and
the feet are essentially parallel to the compressor axis or the feet are transversely mounted.

5. The compressor of claim 1 wherein:
the feet comprise bent sheet metal strips.

6. The compressor of claim 5 wherein:
each foot is formed with first and second flat flange portions (78, 79) respectively extending inward from two edges (74, 75) and joined by a nearly S-curved transition portion (80) to offset the flange portions (78, 79) from each other in a generally parallel relationship by a height; and
the first flange is mounted to the case (22) and the second flange is configured to be mounted to an environmental structure.

7. The compressor of claim 1 wherein:
the feet complementary mounting features comprise:
a pair of holes (82, 84) mountable, respectively, to the first pair of internally-threaded mounting features or the second pair of internally-threaded mounting features in the first orientation; and
at least two further holes (83, 81; 83,85) mountable, in the second orientation, respectively to one of the internally-threaded mounting features of the first pair and one of the internally-threaded mounting features of the second pair.

8. The compressor of claim 1 wherein:
a first hole of said at least two further holes in the feet is between the holes of the pair;
the first hole is exactly between the pair; and
the case further comprises a shared boss bearing the mounting features.

9. The compressor of claim 1 wherein:
the feet are secured to support rails, spanning a gap between the rails.

10. A system (120; 250) comprising:
the compressor (20) of claim 1;
a refrigerant recirculating flowpath (152) through the compressor;
a first heat exchanger (156) along the flowpath downstream of the compressor;
an expansion device (162; 162') along the flowpath downstream of the first heat exchanger; and
a second heat exchanger (164; 164') along the flowpath downstream of the expansion device.

11. The system of claim 10 wherein:
a refrigerant charge comprises at least about 50% carbon dioxide or fluorocarbon by weight.

12. The system of claim 10 being a fixed refrigeration system further comprising:
multiple refrigerated spaces (256); and
a plurality of said second heat exchangers (164'), each being positioned to cool an associated said refrigerated space.

13. A method for manufacturing a plurality of the compressors of claim 1 comprising:
with a first said compressor, mounting the pair of feet in the first orientation; and
with a second said compressor, mounting the pair of feet in the second orientation, the second compressor's case and feet being identical to the first compressor's case and feet.

14. The method of claim 13 wherein:
with the first said compressor the feet are secured to first support rails, spanning a gap between the first support rails; and
with the second said compressor the feet are secured to second support rails, spanning a gap between the second support rails.

## Patentansprüche

1. Verdichter (20), der Folgendes umfasst:
ein Gehäuse (22); und
ein Paar von Füßen (70A, 70B),
wobei die Füße alternativ montierbar sind in:
einer ersten Ausrichtung; und
einer zweiten Ausrichtung orthogonal zur ersten Ausrichtung;
wobei das Gehäuse (22) ein Gussteil mit Montagemerkmalen (50A, 50B, 52A, 52B, 54A, 54B) mit Innengewinde umfasst, die ein erstes Paar (50A, 50B) seitlich beabstandet und ein zweites Paar (52A, 52B) seitlich beabstandet und in Längsrichtung beabstandet von dem ersten Paar beinhalten;
wobei das Paar von Füßen (70A, 70B) komplementäre Montagemerkmale (81, 82, 83, 84, 85) umfasst; und
**dadurch gekennzeichnet, dass**
das erste Paar von linken und rechten vorderen Montagemerkmalen (50A, 50B) und das zweite Paar von mittleren Montagemerkmalen (52A, 52B) an einer einzelnen Insel oder einem hervorragenden Vorsprung (44) ausgebildet sind und ein hinterstes Paar von Montagemerkmalen (54A, 54B) an einem hinteren Vorsprung (46) ausgebildet ist.

2. Verdichter nach Anspruch 1, wobei:
der Verdichter ein Kolbenverdichter ist.

3. Verdichter nach Anspruch 1, ferner umfassend:
einen Elektromotor (24) innerhalb des Gehäuses zum Antreiben der Verdichtung.

4. Verdichter nach Anspruch 3, wobei:
der Elektromotor eine Achse (500) aufweist, die dazu konfiguriert ist, eine Verdichterachse zu bilden;
ein Fuß (70A) an einem Paar aus einem vorderen Montagemerkmal (50A) und einem mittleren Montagemerkmal (52A) montiert ist und ein weiterer Fuß (70B) an einem Paar aus einem zweiten vorderen Montagemerkmal (50B) und einem zweiten mittleren Montagemerkmal (52B) montiert ist; und
die Füße im Wesentlichen parallel zur Verdichterachse liegen oder die Füße quer montiert sind.

5. Verdichter nach Anspruch 1, wobei:
die Füße gebogene Blechstreifen umfassen.

6. Verdichter nach Anspruch 5, wobei:
jeder Fuß mit einem ersten und zweiten flachen Flanschabschnitt (78, 79) ausgebildet ist, die sich jeweils von zwei Kanten (74, 75) nach innen erstrecken und durch einen nahezu S-förmig gekrümmten Übergangsabschnitt (80) verbunden sind, um die Flanschabschnitte (78, 79) in einer allgemein parallelen Beziehung um eine Höhe voneinander zu versetzen; und
der erste Flansch an dem Gehäuse (22) montiert ist und der zweite Flansch dazu konfiguriert ist, an einer Umgebungsstruktur montiert zu sein.

7. Verdichter nach Anspruch 1, wobei:
die komplementären Montagemerkmale der Füße Folgendes umfassen:
ein Paar von Löchern (82, 84), die jeweils an dem ersten Paar von Montagemerkmalen mit Innengewinde oder dem zweiten Paar von Montagemerkmalen mit Innengewinde in der ersten Ausrichtung montierbar sind; und
mindestens zwei weitere Löcher (83, 81; 83, 85), die in der zweiten Ausrichtung jeweils an einem der Montagemerkmale mit Innengewinde des ersten Paars und einem der Montagemerkmale mit Innengewinde des zweiten Paars montierbar sind.

8. Verdichter nach Anspruch 1, wobei:
ein erstes Loch der mindestens zwei weiteren Löcher in den Füßen zwischen den Löchern des Paars liegt;
das erste Loch genau zwischen dem Paar liegt; und
das Gehäuse ferner einen gemeinsamen Vorsprung, der die Montagemerkmale trägt, umfasst.

9. Verdichter nach Anspruch 1, wobei:
die Füße an Stützschienen befestigt sind und einen Spalt zwischen den Schienen überspannen.

10. System (120; 250), das Folgendes umfasst:
den Verdichter (20) nach Anspruch 1;
einen Kältemittelrückführungs-Strömungsweg (152) durch den Verdichter;
einen ersten Wärmetauscher (156) entlang des Strömungswegs stromabwärts des Verdichters;
eine Expansionsvorrichtung (162; 162') entlang des Strömungswegs stromabwärts des ersten Wärmetauschers; und
einen zweiten Wärmetauscher (164; 164') entlang des Strömungswegs stromabwärts der Expansionsvorrichtung.

11. System nach Anspruch 10, wobei:
eine Kältemittelfüllung mindestens etwa 50 Gew.-% Kohlendioxid oder Fluorkohlenstoff umfasst.

12. System nach Anspruch 10, das ein ortsfestes Kühlsystem ist, ferner umfassend:
mehrere Kühlräume (256); und
eine Vielzahl der zweiten Wärmetauscher (164'), von denen jeder positioniert ist, um einen zugeordneten Kühlraum zu kühlen.

13. Verfahren zum Herstellen einer Vielzahl von Verdichtern nach Anspruch 1, das Folgendes umfasst:
bei einem ersten Verdichter, Montieren des Paars von Füßen in der ersten Ausrichtung; und
bei einem zweiten Verdichter, Montieren des Paars von Füßen in der zweiten Ausrichtung, wobei das Gehäuse und die Füße des zweiten Verdichters mit dem Gehäuse und den Füßen des ersten Verdichters identisch sind.

14. Verfahren nach Anspruch 13, wobei:
bei dem ersten Verdichter die Füße an ersten Stützschienen befestigt sind, wobei sie einen Spalt zwischen den ersten Stützschienen überspannen; und
bei dem zweiten Verdichter die Füße an zweiten Stützschienen befestigt sind, wobei sie einen Spalt zwischen den zweiten Stützschienen überspannen.

## Revendications

1. Compresseur (20) comprenant :
un boîtier (22) ; et
une paire de supports (70A, 70B),
dans lequel les supports peuvent être alternativement montés dans :
une première orientation ; et
une seconde orientation orthogonale à la première orientation ;
dans lequel le boîtier (22) comprend un moulage avec des éléments de montage filetés intérieurement (50 A, 50B, 52A, 52B, 54A, 54B) comportant une première paire (50A, 50B) espacée latéralement et une seconde paire (52A, 52B) espacée latéralement et espacée longitudinalement de la première paire ;
dans lequel la paire de supports (70A, 70B) comprend des éléments de montage complémentaires (81, 82, 83, 84, 85) ; et
**caractérisé en ce que**
la première paire d'éléments de montage avant gauche et droit (50A, 50B) et la seconde paire d'éléments de montage intermédiaires (52A, 52B) sont formées sur un seul îlot ou super bossage (44) et une paire d'éléments de montage la plus à l'arrière (54A, 54B) est formée sur un bossage arrière (46).

2. Compresseur selon la revendication 1 dans lequel :
le compresseur est un compresseur alternatif.

3. Compresseur selon la revendication 1 comprenant en outre :
un moteur électrique (24) à l'intérieur du boitier pour entraîner la compression.

4. Compresseur selon la revendication 3 dans lequel :
le moteur électrique a un axe (500) qui est configuré pour former un axe de compresseur ;
un support (70A) est monté sur une paire d'un élément de montage avant (50A) et d'un élément de montage intermédiaire (52A) et
un autre support (70B) est monté sur une paire d'un second élément de montage avant (50B) et d'un second élément de montage intermédiaire (52B) ; et
les supports sont sensiblement parallèles à l'axe de compresseur ou les supports sont montés de manière transversale.

5. Compresseur selon la revendication 1 dans lequel :
les supports comprennent des bandes de tôle pliées.

6. Compresseur selon la revendication 5 dans lequel :
chaque support est formé avec des première et seconde parties de bride plate (78, 79) s'étendant respectivement vers l'intérieur à partir de deux bords (74, 75) et reliées par une partie de transition presque incurvée en S (80) pour décaler les parties de bride (78, 79) l'une de l'autre dans une relation généralement parallèle d'une hauteur ; et
la première bride est montée sur le boîtier (22) et la seconde bride est configurée pour être montée sur une structure environnementale.

7. Compresseur selon la revendication 1 dans lequel :
les éléments de montage complémentaires de supports comprennent :
une paire de trous (82, 84) pouvant être montés, respectivement, sur la première paire d'éléments de montage filetés intérieurement ou sur la seconde paire d'éléments de montage filetés intérieurement dans la première orientation ; et
au moins deux autres trous (83, 81 ; 83, 85) pouvant être montés, dans la seconde orientation, respectivement sur l'un des éléments de montage filetés intérieurement de la première paire et sur l'un des éléments de montage filetés intérieurement de la seconde paire.

8. Compresseur selon la revendication 1 dans lequel :
un premier trou desdits au moins deux autres trous dans les supports se trouve entre les trous de la paire ;
le premier trou se trouve exactement entre la paire ; et
le boîtier comprend en outre un bossage commun supportant les éléments de montage.

9. Compresseur selon la revendication 1 dans lequel :
les supports sont fixés à des rails de support, couvrant un espace entre les rails.

10. Système (120 ; 250) comprenant :
le compresseur (20) selon la revendication 1 ;
un trajet d'écoulement de recirculation de réfrigérant (152) à travers le compresseur ;
un premier échangeur de chaleur (156) le long du trajet d'écoulement en aval du compresseur ;
un dispositif de détente (162 ; 162') le long du trajet d'écoulement en aval du premier échangeur de chaleur ; et
un second échangeur de chaleur (164 ; 164') le long du trajet d'écoulement en aval du dispositif de détente.

11. Système selon la revendication 10 dans lequel :
une charge de réfrigérant comprend au moins environ 50 % de dioxyde de carbone ou de fluorocarbure en poids.

12. Système selon la revendication 10 étant un système frigorifique fixe comprenant en outre :
plusieurs espaces réfrigérés (256) ; et
une pluralité desdits seconds échangeurs de chaleur (164'), chacun étant positionné pour refroidir undit espace réfrigéré associé.

13. Procédé de fabrication d'une pluralité de compresseurs selon la revendication 1 comprenant :
avec undit premier compresseur, le montage de la paire de supports dans la première orientation ; et
avec undit second compresseur, le montage de la paire de supports dans la seconde orientation, le boîtier et les supports du second compresseur étant identiques au boîtier et aux supports du premier compresseur.

14. Procédé selon la revendication 13 dans lequel :
avec ledit premier compresseur, les supports sont fixés à des premiers rails de support, couvrant un espace entre les premiers rails de support ; et
avec ledit second compresseur, les supports sont fixés à des seconds rails de support, couvrant un espace entre les seconds rails de support.
